# EUROPEAN PATENT SPECIFICATION

(11) **EP 3 381 637 B1**
(45) Date of publication and mention of the grant of the patent: **25.12.2019**
(21) Application number: 18163067.4
(22) Date of filing: 21.03.2018
(51) Int. Cl.: B29C 33/30, B28B 7/02, B29L 31/00

(54) **APPARATUS FOR MODELLING PRODUCTS**
VORRICHTUNG ZUM MODELLIEREN VON PRODUKTEN
APPAREIL POUR LA MODÉLISATION DE PRODUITS

(30) Priority: 27.03.2017 IT 201700033240
(43) Date of publication of application: 03.10.2018
(73) Proprietor: Stamtech S.r.l., 16121 Genova (IT)
(72) Inventor: BATTISTA, Umberto, 16154 Genova (IT); ELLERO, Stefano, 16136 Genova (IT); LANDO', Roberto, 16137 Genova (IT)
(74) Representative: Karaghiosoff, Giorgio Alessandro

(56) References cited:
- EP-A1- 1 249 328
- WO-A1-2013/104369
- DE-T2- 60 212 674
- US-A1- 2013 299 084

## Description

The present invention relates to an apparatus for modelling products, particularly shapeable products extending predominantly on one plane, particularly textile, building, automotive, aeronautical products.

Nowadays the market increasingly requires shapes and drawings in several industry fields. This results in more and more complicated and expensive automatic manufacturing systems.

It is known that textile, building, automotive and aeronautical fields are increasingly characterized by a high automation level in manufacturing process.

In many processes generally for manufacturing or processing products in the above mentioned fields it has been found suitable, among other things, to arrange parts of said products on curved surfaces.

Now it follows a list of industrial processing steps where it is suitable to have a curved surface on which the material, by means of which an article is manufactured, has to be placed:
- ironing step, application of stiffening agents and cutting step in textile field.
- step applying the stiffening agent in automotive, aeronautical fields and the step forming components made of composite material.
- step curing building articles made of concrete or fibre-reinforced mortar till obtaining minimum mechanical performances necessary for product stripping.

Reconfigurable apparatuses are currently known for making tables with deformable surfaces for applications in many industry fields.

The US Patent Application US 2013/299084 A1 discloses an apparatus for modelling products according to the preamble of claim 1.

The Italian patent application n. RM2006A000609, the applicant being a co-owner, describes an apparatus for modelling flat shapeable products allowing an easy processing to be provided, obtaining surfaces having very small radii of curvature.

The apparatus comprises a support structure with a processing surface, composed of a plurality of vertical pins, arranged such to form an array, and actuation means arranged under each one of said pins to move each pin in a substantially vertical direction.

Each pin is equipped with a cap at the top coupled to the caps of adjacent pins by springs such to create a net structure receiving the interpolation surface.

Although such system excellently carries out its function, the elasticity of the interpolation surface and therefore of the surface supporting the product to be shaped, is guaranteed only in the direction joining each pin top. It results that only the deformation of the surface due to shear stresses is absorbed by the springs.

Inventors have found that this is not enough to make interpolation surfaces able to be subjected to deformations of a given amount.

On the other hand this cannot be solved by simply increasing the elasticity of the interpolation surface because it is necessary to guarantee a given stiffness when applying the product to be shaped on the surface.

Therefore the aim of the present invention is to provide an improvement of the above mentioned apparatus, called below also as reconfigurable mould, allowing a higher flexibility of use to be provided also in situations requiring large deformations of the interpolation surface.

The invention achieves the aim by providing an apparatus according to appended claim 1, for modelling products, particularly textile, building, automotive, aeronautical shapeable products extending predominantly on one plane, comprising a plurality of supports arranged such to form an array supporting a flexible surface intended to receive the product to be shaped and actuation means intended to move at least a part of said supports such to correspondingly deform the surface. The supports are connected to the surface by interposing an elastic element and belong to a first and a second group. The first group comprises supports peripherally arranged to tension the surface while the second group comprises supports acting for deforming the surface such to cause said surface to take the desired shape.

Supports of the first group have elastic elements connecting to predetermined points arranged along the peripheral edge of said flexible surface and oriented in such a direction to exert an elastic force with a larger component in the direction tangent or parallel to the flexible surface, at least in the region of a peripheral strip thereof along the perimetral edge.

The supports of the second group are advantageously configured to exert a compression force on the flexible surface while the supports of the first group are configured to exert a tensile force at the edges of the flexible surface.

Particularly the supports of the second group are composed of linear actuators with the direction of the actuation travel oriented in a direction essentially perpendicular to the surface and/or to a tangent of the surface in the point of contact of the linear actuator with said flexible surface, an elastic element being interposed between each linear actuator and the flexible surface.

In practice the springs joining the tops of the pins are replaced by a first group of springs acting individually and independently from each other, on each pin and by a second group of springs acting for tensioning the surface that is to arrange the apparatus in an initial shear stress condition. Thus the elasticity of the structure is released to the greatest extent from the Young's modulus of the interpolation surface while guaranteeing the highest flexibility of operation and in selecting the materials.

By means of such simple, but very efficacious, structure the inventors were able to carry out finite element analyses to optimize the selection of parameters involved such as the number of supports, their distance, the elastic constant of the springs of the supports to provide apparatuses that are very simple and cheap and contemporaneously sturdy and versatile to be used in many fields.

Further characteristics and improvements are the subject matter of the subclaims.

The characteristics of the invention and advantages deriving therefrom will be more clear from the following detailed description of the annexed figures wherein:
Fig.1 is the conceptual diagram of a reconfigurable mould according to an embodiment of the invention.
Figs. 2-4 schematically are the shaping of a product by using the mould in fig.1 in several configurations.
Fig.5 is a front view of the pins in one embodiment of the apparatus according to the invention.
Fig. 6 is the detail highlighted by a circle in the previous figure.
Fig.7 is a top view of the flattened element arranged on the pin tops.
Fig.8 is a view that can be alternatively a section parallel to the horizontal plane when the interpolation surface embeds the flattened elements or a bottom plan view of the interpolation surface rested on the flattened elements of the pins of the previous figure.
Fig.9 is an axonometric view of the reconfigurable mould according to an embodiment with the interpolation membrane omitted.
Fig.10 is a top view of the mould of the previous figure.
Fig.11 is an axonometric view of a row of pins of the mould of fig.9.
Fig. 12 is the architecture of the pins according to an embodiment using stepping or stepper motors.

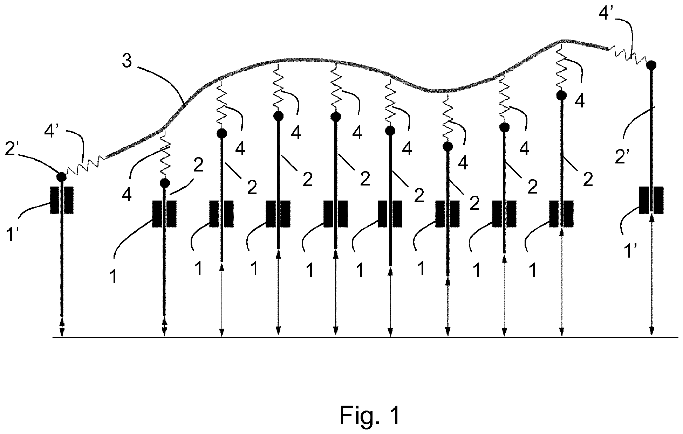

Figure 1 shows a schematic section view of the conceptual model the invention is based on. It is composed of a series of actuators 1, 1' that move as many supports, in this case the pins 2, 2'; the movement of each pin is interpolated by a surface or membrane 3 to which each pin 2, 2' is connected by an elastic element 4, 4'.

Particularly the pins 2 are set to exert a compression force on the flexible surface while the pins 2' are set to exert a tensile force at the edges of the flexible surface 3.

In the arrangement shown in the figure, the pins 2 are shaped like poles moved by actuators 1 in a substantially vertical direction independently from each other such that the top of said pins, and therefore the surface 3 coupled thereto, can take a different position in the space. Obviously it is possible to provide arrangements where pins are oriented according to different directions depending on the supporting surface and on the type of modelling to be carried out.

Supports 2' comprise tensioning pins or elements arranged such to exert a shear force on the surface 3 that is having a component in a substantially perpendicular direction or anyway oblique to the force exerted by the pins 2.

In figure 1 the supports 2' are shown with the corresponding actuators 1' likewise the pins 2. Such arrangement allows the maximum flexibility of use to be provided, since by the movement of the actuators 1' it is possible to adjust the tension exerted on the periphery of the surface 3 in a very accurate manner. Simplified arrangements provide to use passive pins, that is not actuated pins, that support the spring 4' only in a manually adjustable manner and not automatically. In this case the peripheral tension exerted on the surface 3 can be changed, for example, by manually moving and fastening the pin, or by using kits of springs and/or support pins with different characteristics.

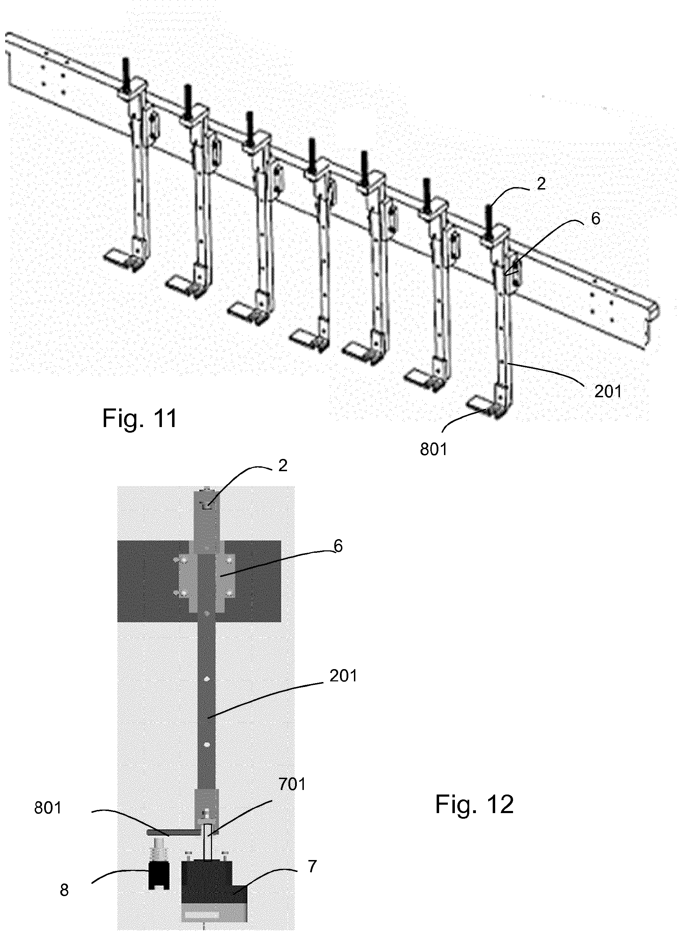

Such as shown in figure 12 the pins 2 are composed of pins 201 sliding in a vertical support guide 6. At the bottom each pin 201 is connected to the end of a guide screw 701 in turn coupled to a nut screw (not shown in the figure) and which screw is in turn driven by a movement unit composed of an electric motor 7, particularly a stepping or stepper motor, and possibly of a gearcase (not shown in the figure). The rotation of the motor is thus converted in a translation motion such that the end of each pin 201 is able to vertically move in the two directions.

There is provided a microswitch 8 driven by the tab 801 when the pin 201 is completely retracted that is it is in the minimum elongation end position. A similar microswitch can be provided to detect the maximum elongation position of the pin by the tab (not shown in the figure) arranged at the distal end of the guide 6. As an alternative a position sensor can be used to continuously or discontinuously determine the translation of the rod along its entire travel and not only at the end stops, thus making it possible to perform a loop control of the pin position.

Stepper motors have a high reliability and are suitable to reach the desired position in an accurate manner. For this reason the arrangement shown in this embodiment provides to use it. Obviously it is also possible to use actuator cylinders, hydraulic jacks, or the like as an alternative to stepper motors to obtain the same vertical sliding of the pins 2.

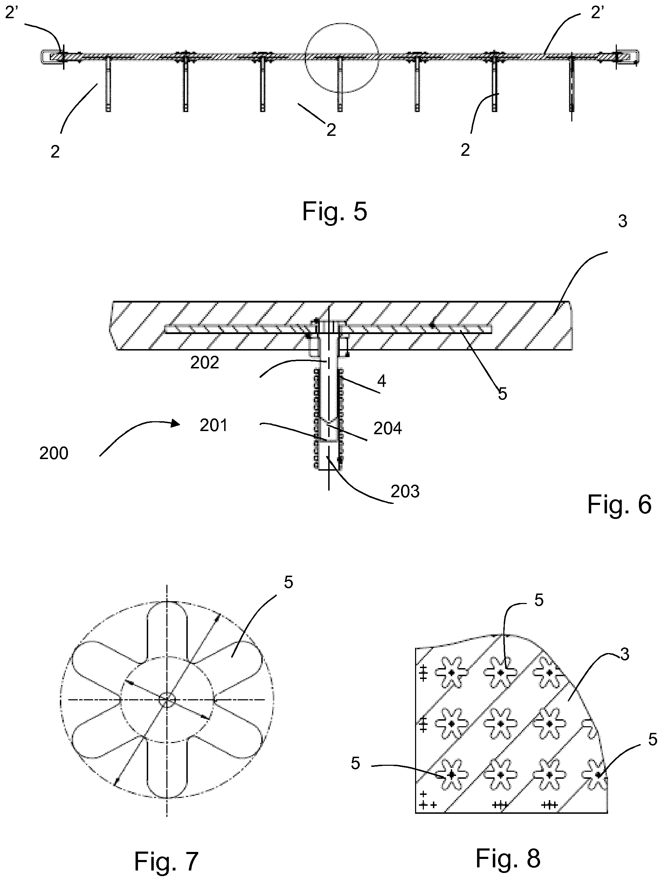

At the top of each pin 2 there is provided an end flattened element 5 (see fig.6) acting like a plate on which the surface 3 is rested. A variant embodiment provides as an alternative the plates or at least a part thereof to be embedded in the surface 3. Such element 5 is made of flexible material, preferably of rubber, compatible with the material of the surface 3 it is embedded in. In turn the surface 3 is made of flexible material, preferably rubber, compatible with the application of fixing or stiffening materials for fabrics.

Figure 7 shows a view of the flattened element 5. As it can be noted it has a star-like shape with flexible ends to guarantee the surface 3 to harmonically adapt itself to the deformation exerted by the compression of the pin 2 in the central area of the element. Figure 8 shows how the flattened elements 5 of the several pins 2 are arranged under or inside the surface 3.

As mentioned above, in one embodiment, the flattened elements of the pins 2 are embedded inside the interpolation surface 3 as shown in figure 5 and 6, instead of being placed under it. By means of this a constraint in the vertical direction is generated between pin and interpolation surface without using bonding agents, or suitable fastening means, for example screw means, thus simplifying and lightening the structure.

Such as shown in figure 6 each pin 2 is coupled to the end flattened element 5 by a compression spring 4 particularly a helical spring, acting like a shock absorber. In practice it is a joint 200 composed of two pins 201, 202 one of which integral with the flattened element 5 and one coincident with, or anyway integral with, the pin 2 connected to the screw. In the rest non-deformed condition, the two pins of the joint 200 are coaxially arranged and have a mutual abutment surface 203, 204. A spring 4 holds the two pins 201, 202 at a given distance such to allow a travel to be provided between the abutment position and the maximum elongation position mediated by the elastic force of the spring.

According to an embodiment, pins have a portion engaging into the spring cooperating with the spring such to generate a screw fitting between spring and pin.

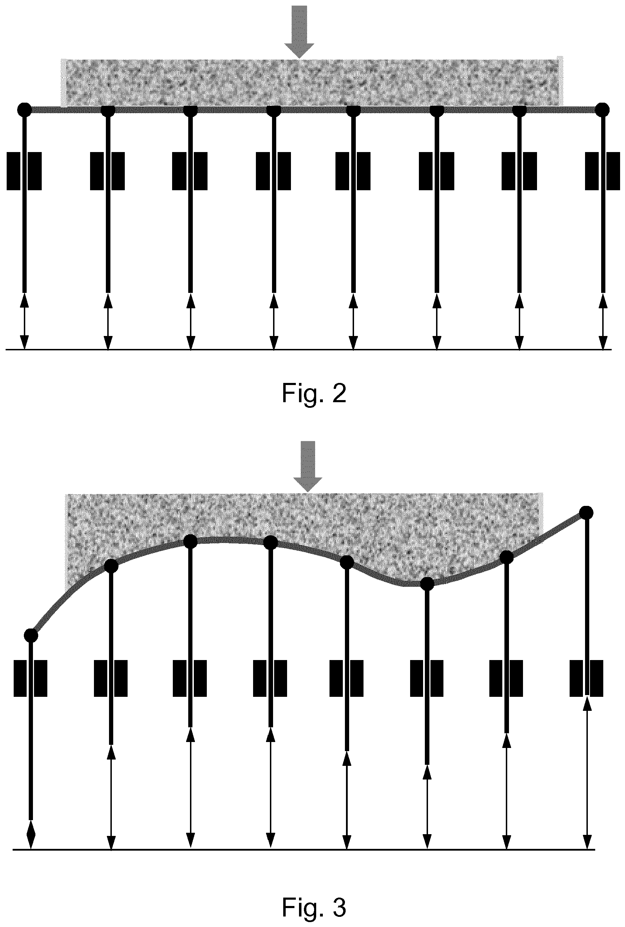

Figures 2 and 3 schematically show the arrangement of the system to make a product with a flat face and a curved face with a bench with a reconfigurable surface according to the invention. The arrow denotes the direction moving the material of the product near the bench: it is initially poured on the bench with the flat configuration (fig.2); then the bench is deformed (fig.3) to obtain the desired shape.

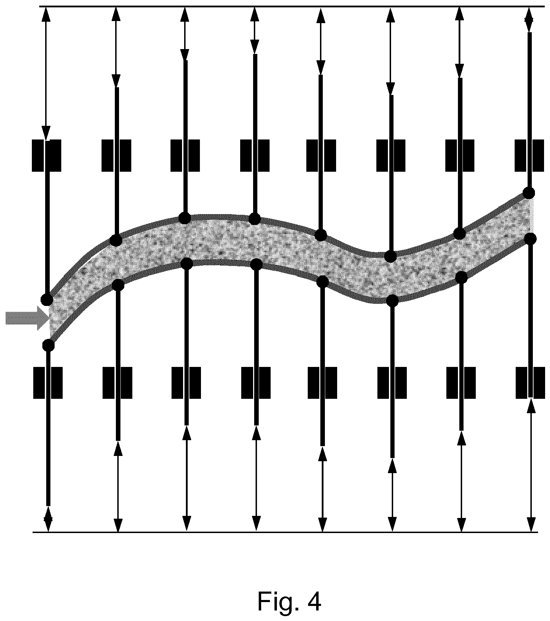

The arrangement shown in figure 4 is also particularly interesting. In this case two benches with facing surfaces are used such to contemporaneously model both the surfaces of a product. Also in this case the arrow denotes the direction moving the material of the product near the bench.

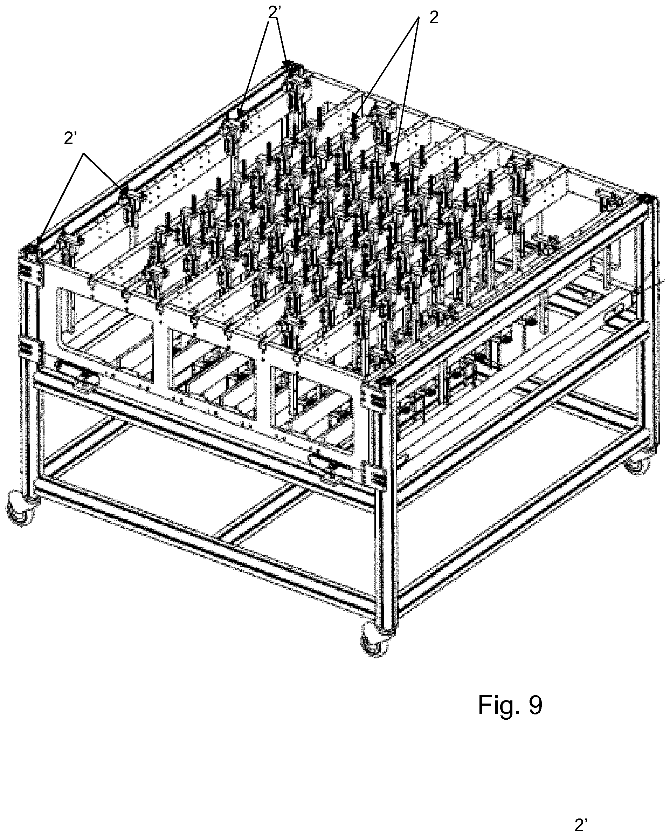

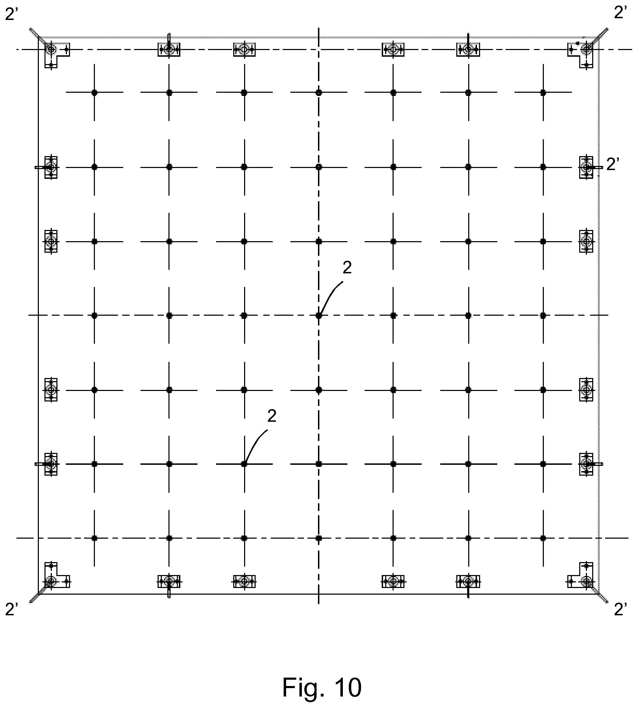

With reference to figures 9 and 10, they describe a specific example where the dimension of the pin array is of 7x7 that is seven rows and seven columns, for a total of 49 pins. The pitch, that is the distance between the pins, has been deeply calculated. A total of 12 passive pins, that is non-actuated pins, has been inserted surrounding the interpolation surface; they have been installed at the edge of the surface at such a distance to suitably share the efforts thereon. The passive pins are connected to the interpolation membrane by means of extension springs, whose elastic constant has been selected after a mathematical modelling shortly described below.

Several infinite element numerical analyses have been carried out on the interpolation surface, to study its mechanical and geometrical characteristics. One of the target components has been modeled and on the basis of such model stresses on the membrane have been studied, by setting the geometry of the reconfigurable table and the elevation of the pins to simulate the real operating conditions of the system.

The simulation of the component has pointed out a more considerably stressed area at the interface between pin and membrane.

However the maximum stress value is small; this is also due to the small deformations required to the interpolation surface by the target component.

The analysis has confirmed how the selection of boundary conditions (that is springs mounted on passive pins) guarantees a lack of imperfections and wrinkles.

The base unit for moving the flexible surface of the reconfigurable support is composed of an elementary array of pins, composed of 7 pins (shown in fig.11) that has been repeated seven times such to create a 7x7 array of active pins.

The first evaluation that has been made for designing the interpolation membrane is the maximum deformation required, between the starting position and the most critical arrival position. This calculation is based on the hypothesis that the elevation of two adjacent pins does not differ from one another for more than a limit depending on the material of the membrane.

The evaluation is performed on two curves whose length has been calculated starting from the flat configuration and bringing it to the desired configuration. The resulting required elongation has to be compensated by the boundary springs; by means of such assumption and by knowing the forces involved and the geometry of the reconfigurable table, it is possible to estimate the elastic constant of the boundary springs.

Once the elastic constant of the spring is fixed it is possible to select the material of the interpolation surface. The assumption is that the membrane has to have the same elasticity of the springs, with which is it placed in series. By such assumption, and based on the geometry of the system it has been possible to estimate the modulus of elasticity of the material of the membrane. After deep evaluations, in a non-limitative manner, the most suitable materials for the membrane are polyurethane or silicone polymers with elasticity ranging from 1,9 to 30 Mpa.

The teachings of the present invention, created for the textile field, can find application with any type of product in several fields such as for example tan industry, automotive, aeronautical and building fields.

## Claims

1. Apparatus for modelling products, particularly textile, building, automotive, aeronautical shapeable products extending predominantly on one plane, comprising a plurality of supports (2, 2') arranged such to form an array supporting a flexible surface (3) intended to receive the product to be shaped and actuating means (1,1') intended to move at least a part of said supports (2, 2') such to correspondingly deform the surface (3), **characterized in that** said supports (2,2') are connected to the surface by interposing an elastic element (4,4') and belong to a first and a second group, wherein the first group comprises supports (2') which are peripherally arranged and comprise tensioning elements or pins arranged such to exert a shear force on the surface (3) that is with a component in a direction substantially perpendicular or anyway oblique to the force exerted by the pins belonging to the second group (2)to tension the surface (3) and the second group comprises supports (2) having the shape of pins moved by the actuating means (2') in a substantially vertical direction independently from each other such that the top of said pins can take a different position in space, the flexible surface (3) being coupled to the top of said rods and the supports of the said second group acting for deforming the surface (3) such to cause said surface to take the desired shape.

2. Apparatus according to claim 1, wherein the supports of the second group (2) are configured to exert a compression force on the flexible surface (3) while the supports of the first group (2') are configured to exert a tensile force at the edges of the flexible surface (3).

3. Apparatus according to claim 1 or 2, wherein the supports of the second group (2) comprise pins equipped at the top with a flattened element (5) acting like a plate on which the surface (3) rests.

4. Apparatus according to claim 3, wherein the flattened element (5) is embedded within the surface (3).

5. Apparatus according to claim 3 or4, wherein the flattened element (5) has a star-like shape with flexible ends such to guarantee the surface (3) to harmonically adapt itself to the deformation exerted by the compression of the pin (2) in the central area of the element (5).

6. Apparatus according to one or more of the preceding claims 3 to 5, wherein each support of the second group (2) is coupled with the flattened element (5) by a joint (200) comprising a pair of pins (201, 202) coaxially arranged in the rest non-deformed configuration and held by a spring (4) at a given distance such to allow a travel from an abutment position to a maximum elongation position to be provided.

7. Apparatus according to one or more of the preceding claims, wherein the elastic elements of the first group (4') comprise extension springs and the elastic elements of the second group (4) comprise compression springs.

8. Apparatus according to claim 7, wherein the flexible surface (3) has a modulus of elasticity ranging from 1,9 to 30 Mpa, while the springs of the elastic elements (4,4') have a modulus of elasticity ranging from 190 to 220 GPa.

9. Apparatus according to one or more of the preceding claims, wherein the flexible surface (3) comprises one or more polyurethane or silicone polymeric materials.

## Patentansprüche

1. Vorrichtung zum Modellieren von Produkten, insbesondere von formbaren Textil-, Bau-, Automobil-, Luftfahrtprodukten, die sich überwiegend in einer Ebene erstrecken, mit einer Mehrzahl von Trägern (2, 2'), die so angeordnet sind, dass sie eine Anordnung bilden, die eine flexible Oberfläche (3) tragen, die dazu bestimmt ist, das zu formende Produkt aufzunehmen, und mit Betätigungsmitteln (1,1'), die dazu bestimmt sind, zumindest einen Teil der Träger (2, 2') zu bewegen, um die Oberfläche (3) entsprechend, **dadurch gekennzeichnet, dass** die Träger (2,2') durch Zwischenschaltung eines elastischen Elements (4,4') mit der Oberfläche verbunden sind und zu einer ersten und einer zweiten Gruppe gehören, wobei die erste Gruppe Träger (2') umfasst, die umlaufend angeordnet sind und Spannelemente oder Stifte aufweisen, die derart angeordnet sind, dass sie eine Scherkraft auf die Oberfläche (3)ausüben bzw. mit einer Komponente in einer Richtung im Wesentlichen senkrecht oder jedenfalls schräg zu der Kraft, die von den Stiften der zweiten Gruppe (2) ausgeübt wird, um die Oberfläche (3) zu spannen, und die zweite Gruppe Träger (2) umfasst, welche die Form von Stiften haben, die durch die Betätigungsmittel (2') in einer im Wesentlichen vertikalen Richtung unabhängig voneinander bewegt werden, so dass die Oberseite der Stifte eine unterschiedliche Raumlage einnehmen kann, wobei die flexible Oberfläche (3) mit der Oberseite der Stangen gekoppelt ist und die Träger der zweiten Gruppe zum Verformen der Oberfläche (3) derart wirken, dass die Oberfläche die gewünschte Form annimmt.

2. Vorrichtung nach Anspruch 1, wobei die Träger der zweiten Gruppe (2) konfiguriert sind, um eine Kompressionskraft auf die flexible Oberfläche (3) auszuüben, während die Träger der ersten Gruppe (2') konfiguriert sind, um eine Zugkraft an den Kanten der flexiblen Oberfläche (3) auszuüben.

3. Vorrichtung nach Anspruch 1 oder 2, wobei die Träger der zweiten Gruppe (2) Stifte aufweisen, die oben mit einem abgeflachten Element (5) ausgestattet sind, das wie eine Platte wirkt, auf der die Oberfläche (3) aufliegt.

4. Vorrichtung nach Anspruch 3, wobei das abgeflachte Element (5) in die Oberfläche (3) eingebettet ist.

5. Vorrichtung nach Anspruch 3 oder 4, wobei das abgeflachte Element (5) eine sternartige Form mit flexiblen Enden aufweist, um ein harmonisches Anpassen der Oberfläche (3) an die durch das Zusammendrücken des Stifts (2) im mittleren Bereich des Elements (5) ausgeübte Verformung zu gewährleisten.

6. Vorrichtung nach einem oder mehreren der vorhergehenden Ansprüche 3 bis 5, wobei jeder Träger der zweiten Gruppe (2) mit dem abgeflachten Element (5) durch ein Gelenk (200) gekoppelt ist, das ein Paar Stifte (201, 202) umfasst, die koaxial in der nicht verformten Ruhekonfiguration angeordnet sind und von einer Feder (4) in einem gegebenen Abstand gehalten werden, um eine Verlagerung von einer Anschlagposition zu einer maximalen Verlängerungsposition zu ermöglichen.

7. Vorrichtung nach einem oder mehreren der vorhergehenden Ansprüche, wobei die elastischen Elemente der ersten Gruppe (4') Zugfedern umfassen und die elastischen Elemente der zweiten Gruppe (4) Druckfedern umfassen.

8. Vorrichtung nach Anspruch 7, wobei die flexible Oberfläche (3) einen Elastizitätsmodul im Bereich von 1,9 bis 30 MPa aufweist, während die Federn der elastischen Elemente (4,4') einen Elastizitätsmodul im Bereich von 190 bis 220 GPa aufweisen.

9. Vorrichtung nach einem oder mehreren der vorhergehenden Ansprüche, wobei die flexible Oberfläche (3) ein oder mehrere Polyurethan- oder Silikonpolymermaterialien umfasst.

## Revendications

1. Appareil pour la modélisation de produits, notamment de produits textiles, de construction, automobiles, aéronautiques, pouvant être modelés, s'étendant principalement sur un plan, comprenant une pluralité de supports (2, 2') agencés de manière à former un réseau supportant une surface flexible (3) destinée à recevoir le produit à modeler et des moyens d'actionnement (1, 1') destinés à déplacer au moins une partie desdits supports (2, 2') de manière à déformer la surface (3) de manière correspondante, **caractérisé en ce que** lesdits supports (2, 2') sont reliés à la surface en interposant un élément élastique (4, 4') et appartiennent à un premier et à un deuxième groupe, dans lequel le premier groupe comprend des supports (2') agencés de manière périphérique et comprenant des éléments de tension ou des broches agencés de manière à exercer un effort de cisaillement sur la surface (3), c.à.d. avec un composant dans une direction sensiblement perpendiculaire ou de toute façon oblique à la force exercée par les broches appartenant au deuxième groupe (2) pour tendre la surface (3) et le deuxième groupe comprenant des supports (2) en forme de broches déplacées par le moyen d'actionnement (2') dans une direction sensiblement verticale indépendamment les unes des autres de manière que le dessus desdites broches puisse adopter une position différente dans l'espace, la surface flexible (3) étant couplée au dessus desdites tiges et les supports dudit deuxième groupe agissant pour déformer la surface (3) pour que ladite surface prenne la forme désirée.

2. Appareil selon la revendication 1, dans lequel les supports du deuxième groupe (2) sont configurés pour exercer une force de compression sur la surface flexible (3) tandis que les supports du premier groupe (2') sont configurés pour exercer une force de traction sur les bords de la surface flexible (3).

3. Appareil selon la revendication 1 ou 2, dans lequel les supports du deuxième groupe (2) comprennent des broches munies au-dessus d'un élément aplati (5) agissant comme une plaque sur laquelle repose la surface (3).

4. Appareil selon la revendication 3, dans lequel l'élément aplati (5) est noyé dans la surface (3).

5. Appareil selon la revendication 3 ou 4, dans lequel l'élément aplati (5) présente une forme en étoile avec des extrémités flexibles de manière à garantir que la surface (3) s'adapte harmonieusement à la déformation exercée par la compression de la broche (2) dans la zone centrale de l'élément (5).

6. Appareil selon l'une ou plusieurs des revendications précédentes 3 à 5, dans lequel chaque support du deuxième groupe (2) est couplé avec un élément aplati (5) au moyen d'un joint (200) comprenant une paire de broches (201, 202) agencées coaxialement dans la configuration non-déformée au repos et maintenues par un ressort (4) à une distance donnée de manière à permettre la course d'une position de butée à une position d'allongement maximal.

7. Appareil selon l'une ou plusieurs des revendications précédentes, dans lequel les éléments élastiques du premier groupe (4') comprennent des ressorts d'extension et les éléments élastiques du deuxième groupe (4) comprennent des ressorts de compression.

8. Appareil selon la revendication 7, dans lequel la surface flexible (3) présente un module d'élasticité compris entre 1,9 et 30 Mpa, tandis que les ressorts des éléments élastiques (4, 4') présentent un module d'élasticité compris entre 190 et 220 GPa.

9. Appareil selon l'une ou plusieurs des revendications précédentes, dans lequel la surface flexible (3) comprend un ou plusieurs matériaux de polymères de polyuréthane ou de silicone.
